# EUROPEAN PATENT SPECIFICATION

(11) **EP 0 637 556 B1**
(45) Date of publication and mention of the grant of the patent: **03.12.1997**
(21) Application number: 94305606.9
(22) Date of filing: 28.07.1994
(51) Int. Cl.: B65G 15/08, B65G 15/64

(54) **Tubular belt conveyor**
Schlauchbandförderer
Transporteur à bande tubulaire

(30) Priority: 05.08.1993 JP 194633/93; 05.08.1993 JP 194634/93
(43) Date of publication of application: 08.02.1995
(60) Divisional application: 96201355.3
(73) Proprietor: Bridgestone Corporation, Tokyo (JP)
(72) Inventor: Kuroda, Kimihide, Kitakyushu-shi, Fukuoka-ken (JP)
(74) Representative: Ben-Nathan, Laurence Albert

(56) References cited:
- EP-A- 0 058 040
- EP-A- 0 301 454
- GB-A- 2 061 853
- US-A- 3 429 422
- US-A- 4 402 395
- US-A- 4 527 686
- US-A- 4 572 417
- US-A- 4 630 726

## Description

### BACKGROUND OF THE INVENTION

The present invention relates to a tubular belt conveyor in which an endless conveyor belt is rolled up into a tubular form in which material is wrapped and conveyed.

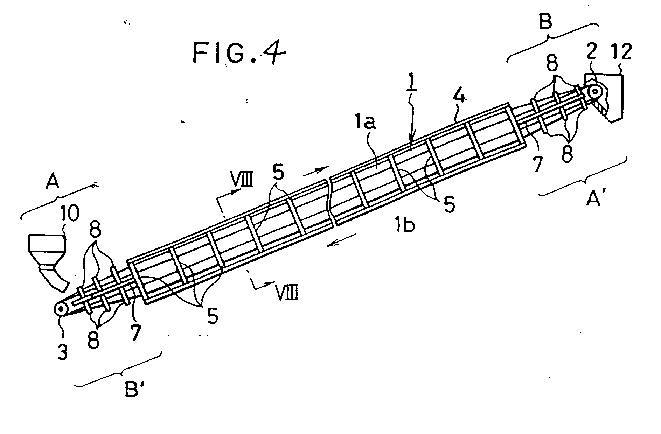

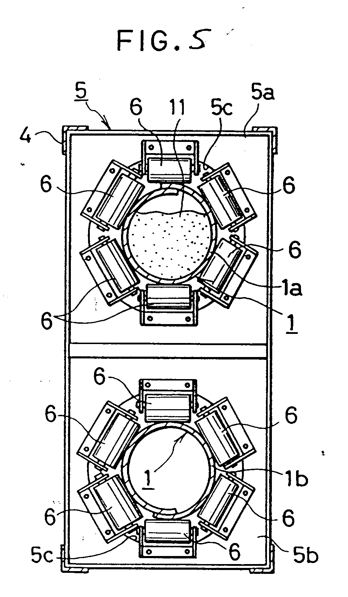

With respect to Fig. 4 to 7, a conventional tubular belt conveyor will be described, in which an endless conveyor belt 1 is rolled out to a flat shape which is wound around a pair of pulleys 2 and 3, and is circulated by rotating any of the pulleys 2 and 3 by drive means such as a motor (not shown). Going and returning paths 1a and 1b of the conveyor belt 12 pass through openings 5c in the middle of upper and lower chambers 5a and 5b of a plurality of shape-maintaining frames 5 fixed to support frame 5 at a certain distance along a conveying direction between the pulleys 2 and 3, and the belt 1 is rolled up to a tubular form by a plurality of shape-maintaining rollers 6 around the opening 5c.

As shown in Fig. 4, in trough transforming sections "A", "A'", "B" and "B'" in which the conveyor belt 1 is rolled up into a tubular shape from a flat shape wound on one of the pulleys 2 and 3, or is rolled out from a tubular shape into a flat shape wound on the other of pulleys 2 and 3, the conveyor belt 1 is guided by guide rollers 9 pivoted to a plurality of guide frames 8 fixed to frames 7 which extend from the ends of the support frame 4.

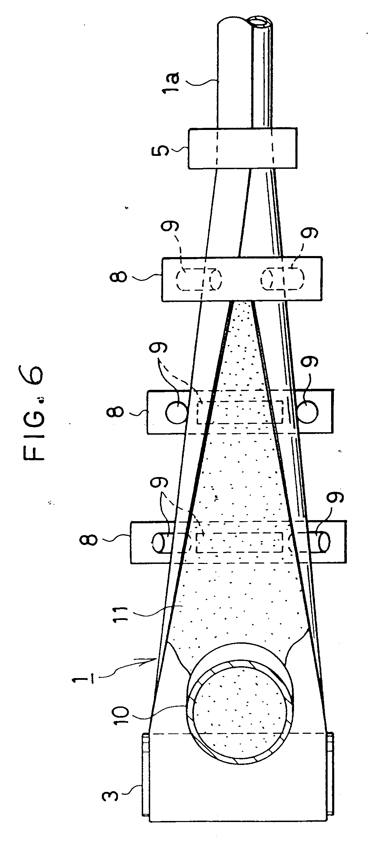

As shown in Fig. 6, while the conveyor belt 1 which is rolled out to a flat shape and rotates around the rear pulley 3 is rolled up through the guide frames 8 of the trough transforming section "A", it encloses material 11 thrown from a supply hopper 10. Then, the belt 1 passes through the upper opening 5c of each of the shape-maintaining frames 5 and is rolled out to a flat shape while it passes through the guide frame 8 in the trough transforming section "B". When the belt 1 is rotated around the front pulley 2, the material 11 is thrown onto a receiving hopper 12, and then, it is rolled up into a tubular shape again in the trough transforming section "A'" and passes through the lower opening 5c of the guide frame 5. It is rolled out to a flat shape in the trough transforming section "B'" and circulated around the rear pulley 3.

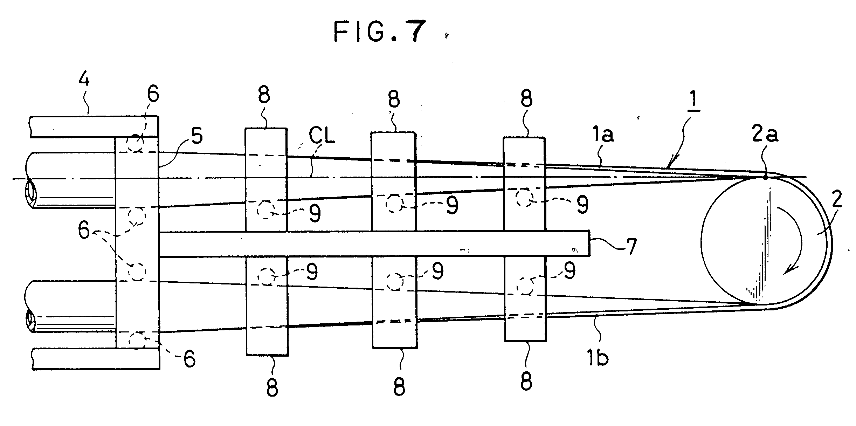

The foregoing schematically mentions structure and operation of such a tubular belt conveyor. In the trough transforming section "B" of the conventional conveyor belt 1, as shown in Fig. 7, to extend the center and side edges of the unfolded conveyor belt 1 equally by pulling force of the front pulley 2, an extension of the central line of the tubular belt 1 coincides with a top 2a of the outer circumference of the front pulley 2 which contacts the conveyor belt 1 or is positioned lower than the top 2a as mentioned in Japanese Patent Laid-Open Pub. No.63-262320.

The arrangement of the rear pulley 3 and the conveyor belt 1 in the trough transforming section "A" is horizontally symmetrical with those in the trough transforming section "B". (not shown) The trough transforming sections "A'" and "B'" are vertically symmetrical with the trough transforming sections "B" and "A" respectively. (not shown)

In the foregoing conventional tubular belt conveyor, the conveyor belt 1 which goes into the trough transforming section "B" is still of tubular shape, and at the portion, the side edges of the conveyor belt 1 are not continuous, but are merely overlapped, thereby causing stresses of the side edges regardless of each other and lacking uniform distribution. Therefore, owing to slight twisting of the conveyor belt 1, difference in stress between the side edges occurs, thereby causing difference in elongation of the side edges, inclining U-shaped portion and deviating a flat belt to one side.

To avoid the disadvantages, an automatic centering roller is provided in the trough transforming section to prevent the belt for deviating sideward, but loads are also liable to be deviated or belt does not normally run by the automatic centering roller if the roller is damaged, thereby damaging the side edge of the conveyor belt 1 to the guide frame 8 and folding back the side edge.

US-A-4,630,726 discloses a tubular belt conveyor in accordance with the preamble of Claim 1.

EP-A-0,058,040 discloses a tubular belt conveyor which in Fig. 15 has guide rollers (50, 51), the vertical disposition of these guide rollers is not referred to explicitly.

### SUMMARY OF THE INVENTION

In view of the disadvantages in the prior art, it is an object to provide a tubular belt conveyor which prevents a conveyor belt from damaging the side edge of the belt and folding back if loads are deviated or a roller is damaged.

According to the present invention, there is provided a tubular belt conveyor in accordance with Claim 1.

The guide roller is provided to go away from the straight line between the tops of the outer circumferences of the pulleys. The belt is wound or left with stressful side edges. Even if loads should be deviated, even if the guide roller is damaged or even if the belt is twisted, it will be naturally corrected, thereby preventing the belt from deviating sideward or folding back.

A pair of pressing rollers may be provided adjacent to one of the pulleys to press the side edges of the belt on the pulley, thereby preventing the side edges of the belt from folding out. The pressing roller may be provided adjustably in vertical and horizontal directions so that belts having different thickness may be applied.

### BRIEF DESCRIPTION OF THE DRAWINGS

The features and advantages of the invention will become more apparent based on detailed description of embodiments with respect to drawings wherein:
Fig. 1 is a side elevational view of an embodiment of the tubular belt conveyor according to the invention;
Fig. 2 is a top plan view of the same;
Fig. 3 is an enlarged sectional view taken along the line III-III in Fig. 2;
Fig. 4 is a schematic side elevational view of a conventional tubular belt conveyor;
Fig. 5 is an enlarged sectional view taken along the line VIII-VIII in Fig. 4;
Fig. 6 is a top plan view of the rear portion of the conventional tubular belt conveyor; and
Fig. 7 is a side elevational view of the same.

### DETAILED DESCRIPTION OF PREFERRED EMBODIMENTS

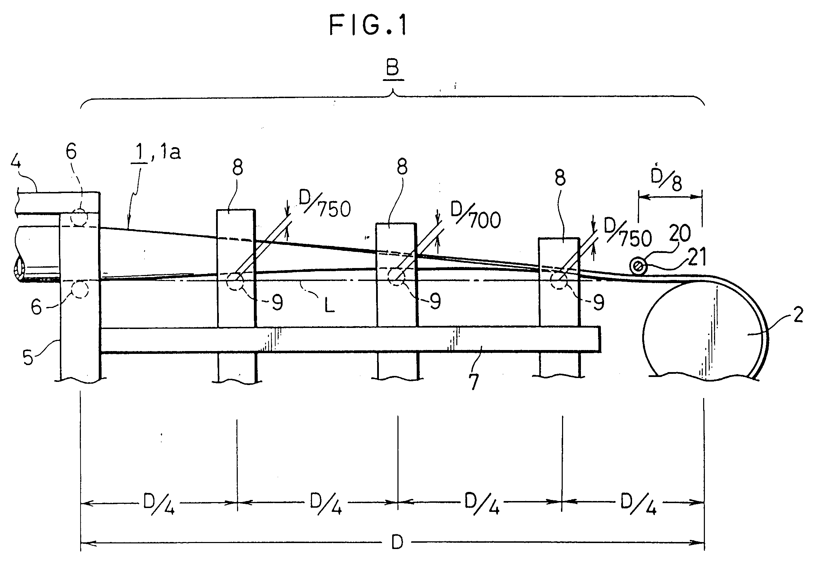

Figs. 1 to 3 illustrate an embodiment of the invention. The same numerals are assigned to the same members as those in the prior art.

With respect to Figs. 1 to 3, three guide frames 8 are disposed at equal distance in a trough transforming section, i.e. when the total length of a trough transforming section "B" is "D", each of the guide frames 8 is disposed at a distance of D/4. Guide rollers 9 for guiding the bottom of a conveyor belt 1 through the guide frames 8 are arranged above a straight line which connects between the tops of the outer circumferences of the pulleys 2 and 3 in the trough transforming section "B".

The distance between the straight line "L" and the top of the middle guide roller 9 may be D/700 at the middle guide roller, while it may be D/750 at the rollers at both sides of the middle guide roller 9. The tubular belt 1 is disposed such that the bottom line coincides with the straight line "L".

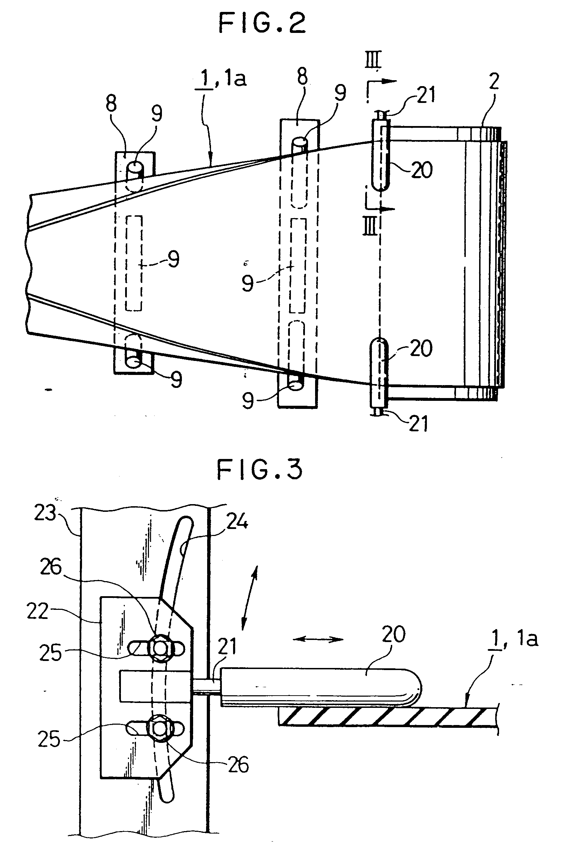

At the middle position between the pulley 2 and guide frame 8 adjacent thereto, or at the position of the distance D/8 from the top of the pulley 2 towards the adjacent guide frame 8, there is provided a pair of pressing rollers 20 for pressing the side edges of the conveyor belt 1 to contact the outer circumferential surface of the pulley 2. As shown in Fig. 3, a shaft 21 connected to the pressing roller 20 is fixed in a substantially horizontal direction with respect to a support plate 22, which is mounted to a support body 23 by a pair of bolts and nuts 26 which pass through an arcuate bore 24 having the straight line "L" as center in the support body 23 and through substantially horizontal bores 25 in the support plate 22, thereby allowing the pressing roller 20 to move vertically and horizontally.

As mentioned above, the middle guide roller 9 in the guide frame 8 is disposed upward from the straight line "L", so that the conveyor belt 1 is bent upward and the side edges of the belt is wound around the pulley 2 with tension. Thus, even if loads should be deviated, even if the guide rollers 9 are damaged or even if the tubular belt is twisted, it will be naturally corrected in the trough transforming section "B" to prevent the conveyor belt 1 from turning aside or over. It is prevented that the guide frames 8 are damaged by the side edges of the conveyor belt 1. In the vicinity of the pulley 2 in the trough transforming section "B", at least one pair of pressing rollers 20 for pressing the side edges of the conveyor belt 1 onto the pulley 2 effectively prevents the side edges of the conveyor belt 1 from turning over.

The description only relates to the trough transforming section "B", but as shown in Fig. 4, a trough transforming section "A" may be horizontally symmetrical with the trough transforming section "A", a trough transforming section "A'" may be vertically symmetrical with the trough transforming section "B" or a trough transforming section "B'" may be vertically and horizontally symmetrical with the trough transforming section "B", so that similar results could be achieved. More than one pressing roller 20 may be provided.

The foregoing merely relates to preferred embodiments of the present invention, but various changes and modifications may be made by persons skilled in the art without departing from the scope of claims.

## Claims

1. A tubular belt conveyor comprising:
a pair of pulleys (2,3);
an endless conveyor belt (1) which is wound around the pair of pulleys (2,3), the belt (1) being rolled up into a tubular shape in which material is conveyed; and
guide rollers (9) for guiding the bottom of the conveyor belt (1) positioned adjacent to each of the pulleys (2,3) to transform the flat belt wound on the pulleys (2,3) into a tubular shape, or vice versa,
charcterized in that
the uppermost, or lowermost, part of the outer peripheries of the guide rollers (9) are disposed upwardly, or downwardly, respectively, of a straight line between the uppermost, or lowermost, part, respectively, of the outer peripheries of the pulleys (2,3), thereby providing uniform distribution of stresses of the belt, so that the side edges of the belt are wound around the respective pulley (2,3) or unwound therefrom with tension to prevent the belt from turning aside or over for smooth running of the belt.

2. A tubular belt conveyor as defined in claim 1 wherein there is provided a pair of pressing rollers (20) which press side edges of the flat conveyor belt (1) between the foremost guide roller (9) and the respective pulley (2,3).

3. A tubular belt conveyor as defined in claim 2 wherein each of the pressing rollers (20) is provided, adjustably in a vertical direction, on a support (8).

4. A tubular belt conveyor as defined in claim 2 wherein each of the pressing rollers (20) is provided adjustably in a horizontal direction.

## Patentansprüche

1. Ein schlauchförmiger Gurtbandförderer, welcher umfaßt:
ein Paar Laufrollen (2, 3);
ein endloses Förderband (1), welches um das Paar Laufrollen (2, 3) gewunden ist, wobei das Band (1) aufgerollt ist in eine schlauchförmige Gestalt, in welchem Material befördert wird; und
Führungsroller (9) zum Führen des Bodens des Förderbandes (1), die angrenzend an jede der Laufrollen positioniert sind, um das flache, um die Laufrollen (2, 3) gewundene Band in eine schlauchförmige Form zu verwandeln, oder umgekehrt,
dadurch gekennzeichnet, daß
der oberste oder unterste Teil des äußeren Randes der Führungsroller (9) aufwärts, bzw. abwärts ausgerichtet ist, und zwar in gerader Linie zwischen dem oberen, bzw. unteren Teil des äußeren Randes der Laufrollen (2, 3), was für eine gleichmäßige Verteilung der Dehnung des Bandes sorgt, so daß die Seitenränder des Bandes um die betreffende Laufrolle (2, 3) herumgewunden werden oder mit Spannung von diesen abgewickelt werden, um zu verhindern, daß sich das Band seitwärts dreht oder umschlägt sondern ruhig läuft.

2. Ein schlauchförmiger Gurtbandförderer wie in Anspruch 1 beschrieben, bei welchem ein Paar von Druckrollern (20) vorgesehen ist, welche die Seitenränder des flachen Förderbandes (1) zwischen den vordersten Führungsroller (9) und die entsprechende Laufrolle (2, 3) drücken.

3. Ein schlauchförmiger Gurtbandförderer wie in Anspruch 2 beschrieben, bei welchem jeder der Druckroller (20) einstellbar in einer vertikalen Richtung sich auf einem Träger (8) befindet.

4. Ein schlauchförmiger Gurtbandförderer wie beschrieben in Anspruch 2, bei welchen jeder der Druckroller (20) sich einstellbar in einer horizontalen Richtung befindet.

## Revendications

1. Transporteur à bande tubulaire comprenant :
une paire de poulies (2, 3) ;
une bande transporteuse sans fin (1) qui est enroulée autour de la paire de poulies (2, 3), la bande (1) étant enroulée selon une forme tubulaire dans laquelle un matériau est transporté ; et
des rouleaux de guidage (9) destinés à guider le fond de la bande transporteuse (1) positionnés à proximité de chacune des poulies (2, 3) afin de conférer à la bande plate enroulée sur les poulies (2, 3) une forme tubulaire, ou vice versa,
caractérisé en ce que
la partie supérieure, ou inférieure, des périphéries extérieures des rouleaux de guidage (9) est disposée vers le haut, ou vers le bas, respectivement, d'une ligne droite entre la partie supérieure, ou inférieure, respectivement, des périphéries extérieures des poulies (2, 3), de manière à assurer une répartition uniforme des contraintes de la bande, de sorte que les bords latéraux de la bande sont enroulés autour de la poulie respective (2, 3), ou déroulés de celle-ci, avec une tension pour empêcher que la bande ne tourne sur le côté ou ne se retourne afin d'assurer un déplacement régulier de la bande.

2. Transporteur à bande tubulaire selon la revendication 1, dans lequel est prévue une paire de rouleaux presseurs (20) qui pressent les bords latéraux de la bande transporteuse plate (1) entre le rouleau de guidage le plus avant (9) et la poulie respective (2, 3).

3. Transporteur à bande tubulaire selon la revendication 2, dans lequel chacun des rouleaux presseurs (20) est prévu, de manière réglable dans une direction verticale, sur un support (6).

4. Transporteur à bande tubulaire selon la revendication 2, dans lequel chacun des rouleaux presseurs (20) est prévu de manière réglable selon une direction horizontale.
